# DEMANDE DE BREVET EUROPEEN

(11) **EP 4 763 613 A1**
(43) Date de publication de la demande: **24.06.2026**
(21) Numéro de dépôt: 25225888.4
(22) Date de dépôt: 19.12.2025
(51) Int. Cl.: B60P 3/39

(54) **SYSTÉME POUR L'AMÉNAGEMENT INTERIEUR D'UN VÉHICULE, SYSTÉME D'AMEUBLEMENT D'UNE ZONE DE CHARGEMENT D'UN VÉHICULE ET VÉHICULE ASSOCIÉ**

(30) Priorité: 23.12.2024 FR 2415199
(71) Demandeur: Cazes, Maurice, 64140 Billère (FR)
(72) Inventeur: Cazes, Maurice, 64140 Billère (FR)
(74) Mandataire: A.P.I. Conseil

(57) **Abrégé**

L'invention concerne un système pour l'aménagement intérieur d'un véhicule qui comprend un module d'aménagement qui comporte un premier élément de mobilier (10) de forme parallélépipédique agencé pour coulisser le long d'une cloison (10-1),un deuxième élément de mobilier (11) et un cadre de lit (12), le module d'aménagement est agencé pour passer d'une configuration dite « haute », dans laquelle les premier et deuxième élément de mobilier (10, 11) sont positionnés l'un au-dessus de l'autre, à une configuration dite « basse », dans laquelle les éléments de mobilier (10, 11) sont positionnés côte à côte de sorte que la deuxième partie (12-2) de cadre de lit (12) se positionne sensiblement au-dessus d'une face supérieure du deuxième élément de mobilier (11).

L'invention concerne en outre un système d'ameublement (2) d'une zone de chargement d'un véhicule comprenant un système pour l'aménagement intérieur d'un véhicule selon l'invention et un dispositif d'assise (3).

## Description

### Domaine technique

L'invention concerne le domaine de l'aménagement intérieur des véhicules, plus particulièrement de la zone de chargement des véhicules destinés à être habitables. Le système d'aménagement selon l'invention peut en particulier être utilisé pour l'aménagement de véhicules qui présentent une zone de chargement pour y aménager un habitat tout en étant suffisamment importante pour pouvoir accueillir lesdits systèmes. En particulier, l'invention concerne un système pour l'aménagement intérieur d'un véhicule qui comprend un module d'aménagement d'une zone de chargement du véhicule.

L'invention concerne en outre un système d'ameublement d'une zone de chargement d'un véhicule et qui comprend notamment le système pour l'aménagement intérieur d'un véhicule. L'invention concerne également un véhicule aménagé comprenant lesdits systèmes.

### Technique antérieure

Ci-après, nous décrivons l'art antérieur connu à partir duquel l'invention a été développée.

Le développement des modes de voyage autonomes a vu l'essor, il y a quelques décennies, de véhicules routiers communément appelés véhicules récréationnels et qui regroupent les « camping-car » lorsque les véhicules ont une cellule rapportée sur un châssis/cabine de conduite, « motor-home » lorsque la cellule intègre la cabine de conduite ou « van » lorsque le véhicule est un fourgon aménagé. Ces véhicules comprennent tous les équipements de base de la vie courante auxquels un voyageur peut aspirer. En effet, ces véhicules comprennent bien souvent une cabine de douche, des sanitaires, un nécessaire de cuisine et une partie couchette et éventuellement un meuble de toilette/cuvette WC, et, au mieux pour les vans, un espace commun douche/meuble de toilette/cuvette WC. Aucun de ces véhicules, et encore moins les vans, ne possède trois espaces indépendants : cabine de douche, meuble de toilette, cuvette WC. L'aménagement de ces véhicules est bien souvent un défi pour les constructeurs qui doivent optimiser au maximum l'espace de ces véhicules pour pouvoir y intégrer un maximum de fonctionnalités.

De nombreuses solutions visant à optimiser l'espace disponible pour l'aménagement de ces véhicules ont vu le jour, une première solution décrite dans le certificat d'utilité n°CN221315940 propose une solution permettant l'optimisation de l'espace pour le déploiement d'un couchage. Le système proposé permet de plier ou déplier un cadre de lit. Lorsque le cadre de lit est plié, il repose principalement le long d'une cloison de la zone de chargement, tandis qu'en position dépliée le cadre de lit repose en partie sur des taquets disposés et sur un élément de mobilier.

Une deuxième solution décrite dans le document brevet n°CN118107470 propose une solution permettant l'optimisation de l'espace intérieur utilisable du véhicule. Le système proposé permet d'augmenter l'espace intérieur du véhicule par le déploiement d'une extension de la partie arrière du véhicule dans laquelle est ménagée un lit à cadre rétractable.

Depuis quelques années, l'aménagement des fourgons, vans ou camionnettes est en plein essor. Alternative bien moins onéreuse que l'achat d'un camping-car, de plus en plus de sociétés proposent leurs services pour l'aménagement sur-mesure d'anciens véhicules utilitaires. Des kits sont également disponibles à l'achat pour aménager soi-même son véhicule. Cependant, l'aménagement de ces types de véhicules implique de faire des compromis importants concernant le choix des fonctionnalités à intégrer dû à un espace disponible moindre par rapport aux camping-cars.

Cependant, les solutions développées pour les véhicules de type camping-car restent peu adaptées pour les véhicules de plus petite taille et il n'existe pas de solutions intégrées permettant d'aménager directement l'ensemble de la zone de chargement du véhicule. En outre, les solutions proposées ne permettent pas d'optimiser l'espace de manière optimale. En effet, comme cela est souvent le cas, la zone de stockage du véhicule forme une unique pièce dans laquelle sont agencés les éléments de mobilier qui caractérisent différents espaces de vie sans pour autant libérer l'espace qu'ils occupent lorsqu'ils n'ont pas vocation à être utilisés.

Ainsi, il existe un besoin pour optimiser l'espace intérieur dans un véhicule tout en limitant l'espace occupé par les éléments de mobilier.

L'invention a pour but de remédier aux inconvénients de l'art antérieur. En particulier, l'invention a pour but de proposer un système d'aménagement intérieur intégrable dans tout type de véhicule, et permettant d'optimiser l'espace disponible en fonction des besoins de l'utilisateur tout en lui permettant de conserver un espace de vie optimale par rapport aux solutions proposées jusqu'à maintenant.

L'invention a en outre pour but de proposer un système d'ameublement incluant le système d'aménagement intérieur d'un véhicule, ledit système d'ameublement permet en outre d'optimiser l'espace occupé par les dispositifs d'assise tout en permettant leur utilisation dans différentes configurations.

### Résumé de l'invention

L'invention vise à pallier ces inconvénients. Ce qui suit présente un résumé simplifié d'aspects, de modes de réalisation et d'exemples sélectionnés de la présente invention dans le but de fournir une compréhension de base de l'invention. Cependant, ce résumé ne constitue pas un aperçu exhaustif de tous les aspects, modes de réalisation et exemples de l'invention. Son seul but est de présenter des aspects, modes de réalisation et exemples sélectionnés de l'invention sous une forme concise en guise d'introduction à la description plus détaillée des aspects, modes de réalisation et exemples de l'invention qui suivent le résumé.

L'invention vise en particulier un système pour l'aménagement intérieur d'un véhicule, le système comprenant un module d'aménagement d'une zone de chargement du véhicule, le module d'aménagement comportant :
- un premier élément de mobilier de forme parallélépipédique agencé pour coulisser le long d'une cloison de la zone de chargement du véhicule par l'intermédiaire d'au moins un premier moyen de guidage,
- un deuxième élément de mobilier de forme parallélépipédique comprenant :
   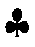 une face inférieure agencée pour reposer sur un plancher de véhicule,
   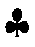 au moins un deuxième moyen de guidage transversal agencé pour être monté entre la face inférieure du deuxième élément de mobilier et un plancher de véhicule de sorte que le deuxième élément de mobilier coulisse,
- un cadre de lit comprenant une première partie de cadre fixée sur une face supérieure du premier élément de mobilier et une deuxième partie de cadre de lit, ledit cadre comprenant au moins un moyen de fixation rétractable agencé pour être relié au plafond du véhicule, ledit module d'aménagement étant agencé pour passer d'une configuration dite « haute », dans laquelle les premier et deuxième élément de mobilier sont positionnés l'un au-dessus de l'autre, à une configuration dite « basse », dans laquelle les premier et deuxième éléments de mobilier sont positionnés côte à côte de sorte que la deuxième partie de cadre de lit se positionne sensiblement au-dessus d'une face supérieure du deuxième élément de mobilier.

Le demandeur a développé un système particulièrement adapté aux véhicules dont le but premier de la zone de chargement n'est pas d'y aménager un espace de vie. Le système selon l'invention permet d'optimiser l'espace des véhicules de type récréationnel mais plus particulièrement des espaces de stockage des vans et fourgons. Le système permet en outre d'optimiser l'espace disponible en permettant le déploiement de plusieurs éléments de mobilier au sein d'un même espace en fonction du choix de l'utilisateur tout en laissant un maximum d'espace disponible lorsque les éléments de mobilier ne sont pas utilisés.

Selon d'autres caractéristiques optionnelles du système, ce dernier peut inclure facultativement une ou plusieurs des caractéristiques suivantes, seules ou en combinaison :
- le premier élément de mobilier, le deuxième élément de mobilier et le cadre de lit sont dimensionnés de manière à correspondre sensiblement à une hauteur d'une zone de chargement du véhicule à aménager.
- le au moins un moyen de fixation rétractable comprend au moins deux sangles rétractables motorisées fixées sur la deuxième partie de cadre de lit.

Selon un deuxième objet, l'invention porte sur un système d'ameublement d'une zone de chargement d'un véhicule, ledit système comprenant :
- un système pour l'aménagement intérieur d'un véhicule selon l'invention,
- au moins un dispositif d'assise comportant :
   ∘ un siège comprenant une assise sur laquelle sont montés une pluralité d'éléments de fixation,
   ∘ un support de siège comprenant une pluralité d'orifices de fixation agencés pour recevoir les éléments de fixation,
   ∘ un moyen de solidarisation/désolidarisation comprenant une pluralité d'ouvertures adaptées pour permettre le passage des éléments de fixation, le moyen de solidarisation/désolidarisation étant en outre agencé pour permettre une fixation réversible entre le siège et le support de siège.

Selon d'autres caractéristiques optionnelles du système, ce dernier peut inclure facultativement une ou plusieurs des caractéristiques suivantes, seules ou en combinaison
- le siège comprend un dossier relié à l'assise, et dans lequel le siège est agencé pour se fixer au support de siège selon une première position dans laquelle la pluralité des orifices de fixation coïncident avec au moins deux éléments de fixation et selon une deuxième position dans laquelle la pluralité des orifices de fixation coïncident avec au moins deux autres éléments de fixation.
- Il comprend au moins deux dispositifs d'assise pour lesquels chaque dossier comprend une face d'appui, et dans lequel :
   - en première position, les faces d'appui comprennent des directions normales parallèles et des sens opposés,
   - en deuxième position, les faces d'appui comprennent des directions normales parallèles et des sens identiques.
- l'au moins un dispositif d'assise comprend un moyen de guidage agencé pour être monté entre le support de siège et un plancher de véhicule de sorte que l'au moins un dispositif d'assise coulisse.
- Il comprend deux paires de dispositifs d'assise, chaque paire comprenant deux dispositifs d'assise positionnés de manière adjacente, lesdites paires étant positionnées de manière que chaque dispositif d'assise de la première paire soit positionné en miroir d'un dispositif d'assise de la deuxième paire.
- les au moins deux dispositifs d'assise agencés pour passer d'une première position à une deuxième position correspondent respectivement à un dispositif d'assise de la première paire et à un dispositif d'assise de la deuxième paire positionnés en miroir, et dans lequel lorsque les faces d'appui des au moins deux dispositifs d'assise sont en deuxième position, les autres dispositifs d'assise des première et deuxième paire étant agencés pour coulisser transversalement de sorte que les dispositifs d'assise de chaque paire ne soient pas adjacents.
- Il comprend en outre une table montée mobile en translation verticale sur un profilé agencé pour être fixé sur un plancher de véhicule et sur la face intérieure d'un pavillon de véhicule, la table étant agencée pour prendre au moins trois positions :
   o une première position haute dans laquelle, lorsque le module d'aménagement est en configuration haute, la table coulisse le long du profilé de manière à être positionnée sensiblement en-dessous du cadre de lit,
   ∘ une deuxième position basse, dans laquelle la table coulisse le long du profilé de manière à être positionnée sensiblement au niveau de l'assise du siège,
   ∘ une troisième position intermédiaire, dans laquelle la table coulisse le long du profilé de manière à être positionnée à une distance prédéterminée par rapport à l'assise du siège.

Selon un troisième objet, l'invention porte sur un véhicule comprenant un système pour l'aménagement intérieur selon l'invention ou un système d'ameublement selon l'invention.

### Brève description des dessins

D'autres caractéristiques et avantages de l'invention seront mieux compris à la lecture de la description qui va suivre et en référence aux dessins annexés, donnés à titre illustratif et nullement limitatif.
[Fig. 1] La figure 1 représente un schéma d'un mode de réalisation d'un système pour l'aménagement intérieur d'un véhicule selon l'invention en position haute.
[Fig. 2] La figure 2 représente un schéma d'un mode de réalisation d'un système pour l'aménagement intérieur d'un véhicule selon l'invention en position haute.
[Fig. 3] La figure 3 représente un schéma d'un mode de réalisation d'un système pour l'aménagement intérieur d'un véhicule selon l'invention en position basse.
[Fig. 4] La figure 4 représente un schéma d'un mode de réalisation d'un système d'ameublement d'une zone de chargement d'un véhicule selon l'invention dans lequel la table est en position intermédiaire.
[Fig. 5] La figure 5 représente un schéma d'un mode de réalisation d'un système d'ameublement d'une zone de chargement d'un véhicule selon l'invention dans lequel la table est en position basse.
[Fig. 6] La figure 6 représente un schéma d'un agencement de deux paires de dispositifs d'assise selon l'invention.
[Fig. 7] La figure 7 représente un schéma d'un premier mode de réalisation d'une partie d'un dispositif d'assise selon l'invention.
[Fig. 8] La figure 8 représente un schéma d'un deuxième mode de réalisation d'un dispositif d'assise selon l'invention.
[Fig. 9] La figure 9 représente un schéma d'un premier mode de réalisation d'une partie d'un dispositif d'assise selon l'invention.

Les figures ne respectent pas nécessairement les échelles, notamment en épaisseur, et ce à des fins d'illustration.

Des aspects de la présente invention sont décrits en référence à des schémas fonctionnels d'appareils (systèmes) selon des modes de réalisation de l'invention.

### Description des modes de réalisation

Ci-après, nous décrivons un résumé de l'invention et le vocabulaire associé, avant de présenter les inconvénients de l'art antérieur, puis enfin de montrer plus en détail comment l'invention y remédie.

Les termes **« fixe** », **« fixé** », ou « **fixer** », au sens de l'invention correspondent à l'association directe ou indirecte d'un élément par rapport à un autre sans mouvement de ces éléments l'un par rapport à l'autre, inamovible ou amovible avec un ou plusieurs éléments intermédiaires.

Ainsi, l'invention concerne un système 1 pour l'aménagement intérieur d'un véhicule, le système 1 comprenant un module d'aménagement d'une zone de chargement du véhicule, de préférence, pour l'aménagement intérieur d'un véhicule de type récréationnel, préférentiellement un van et/ou un fourgon.

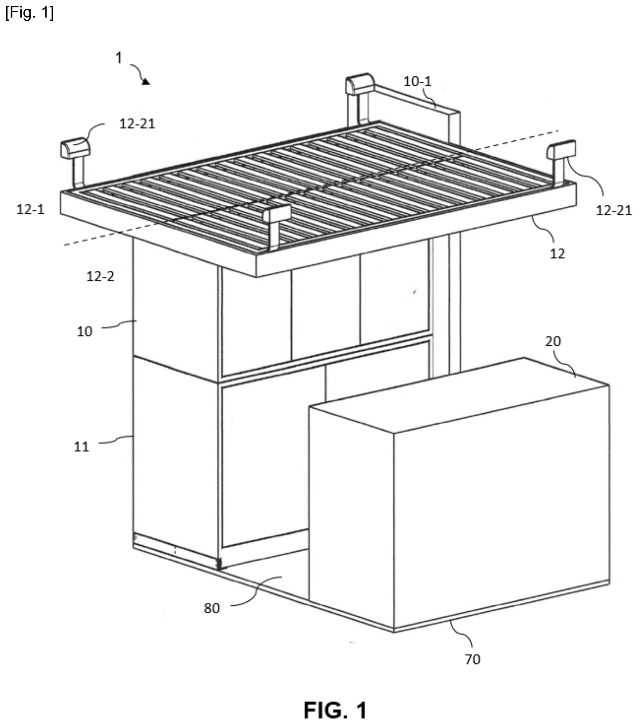

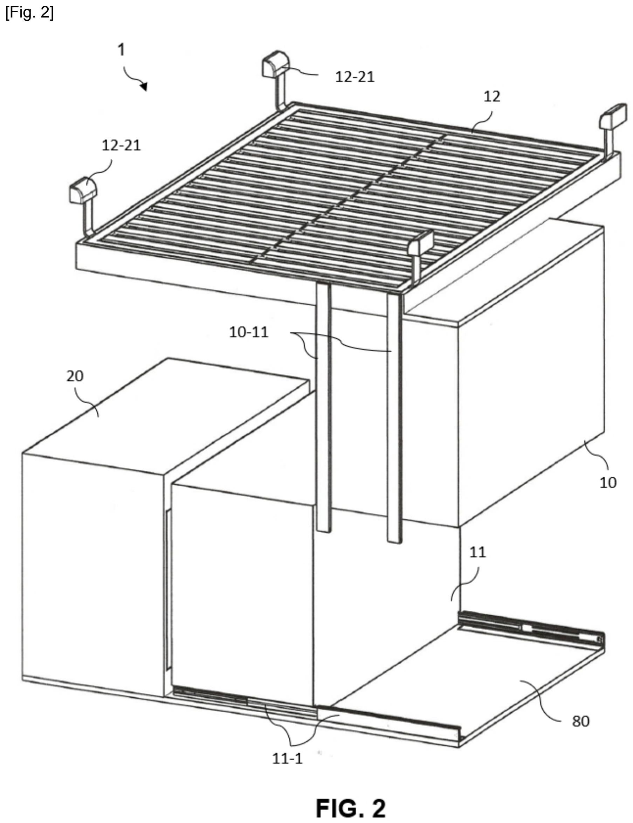

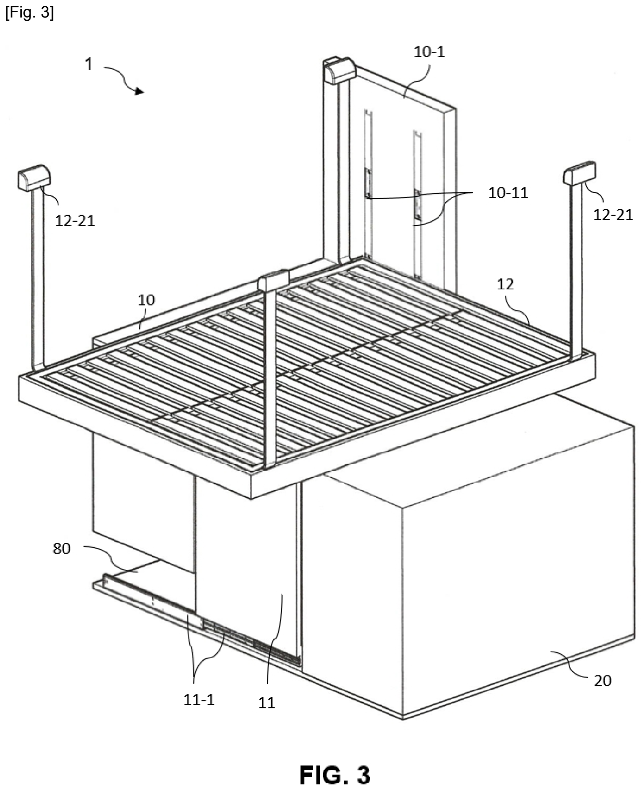

Le module d'aménagement selon l'invention, décrit en lien avec les figures 1 à 3, comporte un premier élément de mobilier 10, un deuxième élément de mobilier 11 et un cadre de lit 12.

Comme mentionné précédemment, le module d'aménagement selon l'invention a pour vocation d'être installé à l'intérieur du véhicule, plus particulièrement dans un espace définissant une zone de stockage ou de chargement du véhicule. A titre d'exemple, la zone de stockage ou de chargement du véhicule peut correspondre à l'ensemble de l'espace intérieur du véhicule hormis l'espace dédié au poste de conduite. De manière préférée, la zone de stockage se situe directement derrière le poste de conduite du véhicule.

Ainsi, le module d'aménagement présente préférentiellement des dimensions adaptées à l'espace intérieur du véhicule, délimité par la carrosserie du véhicule, de manière à y être aisément intégré. De manière préférée, les éléments qui constituent le module d'aménagement peuvent être fixés à une structure de soutien 70 agencée pour reposer sur le plancher de la zone de chargement du véhicule. La structure de soutien 70 peut également être fixée au plancher de la zone de chargement du véhicule. En complément, un plancher 80 peut être monté sur la structure de soutien 70. Pour cela, la structure de soutien 70 peut comprendre une pluralité de solives sur lesquelles peuvent être fixées les éléments du module d'aménagement ou encore le plancher 80.

Dans l'invention, comme présenté en lien avec la figure 1, le module d'aménagement d'un système 1 pour l'aménagement intérieur d'un véhicule comporte un premier élément de mobilier 10 de forme parallélépipédique. Le premier élément de mobilier 10 est agencé pour être monté sur une cloison 10-1, qui délimite par exemple un espace de vie, de la zone de chargement du véhicule. Pour cela, le premier élément de mobilier 10 coulisse le long de cloison 10-1 par l'intermédiaire d'un premier moyen de guidage 10-11.

La cloison 10-1 peut correspondre à une cloison amovible fixée dans la zone de chargement du véhicule ou elle peut correspondre à une partie de carrosserie, une paroi latérale intérieure de carrosserie de la zone de chargement du véhicule.

Le module d'aménagement comprend en outre un deuxième élément de mobilier 11 de forme parallélépipédique. Afin d'optimiser au maximum l'espace disponible, les premier et deuxième éléments de mobilier 10, 11 sont de préférence positionnés l'un au-dessus de l'autre, en contact ou non, et peuvent notamment être de même dimension. Le deuxième élément de mobilier 11 comprend une face inférieure agencée pour reposer sur un plancher 80 de véhicule sur laquelle au moins un deuxième moyen de guidage 11-1 transversal est agencé pour être monté entre la face inférieure du deuxième élément de mobilier 11 et un plancher 80 de véhicule de sorte que le deuxième élément de mobilier 11 coulisse.

De manière avantageuse, les premier et deuxième moyens de guidage 10-11, 11-1 peuvent être équipés de dispositifs de verrouillage afin de permettre de bloquer le moyen de guidage dans différentes positions. En outre, les premier et deuxième moyens de guidage peuvent comprendre un système de butées avec amortisseurs de fin de course.

A titre d'exemples, les premier et deuxième moyens de guidage 10-11, 11-1 peuvent respectivement correspondre à un rail de guidage à galets ou à billes fixé directement sur la cloison 10-1 ou sur le plancher 80.

Toujours dans le cadre de l'invention, le module d'aménagement comporte un cadre de lit 12 comprenant une première partie 12-1 de cadre fixée sur une face supérieure du premier élément de mobilier 10 et une deuxième partie 12-2 de cadre de lit 12.

Le cadre de lit 12 comprend au moins un moyen de fixation rétractable 12-21 agencé pour être relié au plafond du véhicule.

Le moyen de fixation rétractable 12-21 peut correspondre à un enrouleur de sangle monté sur ou dans le cadre de lit 12 et peut comprendre un moteur dont l'action permet d'enrouler ou de dérouler la sangle permettant ainsi une translation verticale du cadre de lit 12. Alternativement, le moyen de fixation rétractable 12-21 peut correspondre à un vérin.

De manière générale, le moyen de fixation rétractable 12-21 peut être fixé par ancrage au plafond du véhicule. Le moyen de fixation rétractable 12-21 peut être monté à différentes positions du cadre de lit 12, par exemple de manière symétrique à chaque extrémité du cadre de lit 12.

Dans un mode de réalisation d'un système 1 pour l'aménagement intérieur d'un véhicule, le moyen de fixation rétractable 12-21 peut comprendre au moins deux sangles rétractables motorisées fixées sur la deuxième partie 12-2 de cadre de lit 12.

Dans l'invention, le module d'aménagement est agencé pour passer d'une configuration dite « haute », dans laquelle les premier et deuxième éléments de mobilier 10, 11 sont positionnés l'un au-dessus de l'autre, à une configuration dite « basse », dans laquelle les premier et deuxième éléments de mobilier 10, 11 sont positionnés côte à côte de sorte que la deuxième partie 12-2 de cadre de lit 12 se positionne sensiblement au-dessus d'une face supérieure du deuxième élément de mobilier 11.

L'agencement des premier et deuxième éléments de mobilier 10, 11 en combinaison avec les moyens de guidage permet ainsi d'optimiser l'espace sous la deuxième partie de cadre 12-2. Notamment l'espace délimité par un troisième élément de mobilier 20 positionné à proximité des premier et deuxième éléments de mobilier 10, 11, qui, dans la configuration haute permet à un utilisateur l'accès auxdits éléments de mobilier et dans la configuration basse libère l'espace occupé par le premier élément de mobilier 10 et permet d'occuper l'espace entre le deuxième élément de mobilier 11 et le troisième élément de mobilier 20 qui ne présente plus aucune utilité en configuration basse.

A titre d'exemple illustratif, le troisième élément de mobilier 20 peut correspondre à un meuble équipé d'un évier et d'un système de raccordement à une arrivée et à une évacuation d'eau et d'une plaque de cuisson.

Bien entendu, afin d'optimiser l'espace disponible dans la zone de chargement de véhicule, le premier élément de mobilier 10, le deuxième élément de mobilier 11 et le cadre de lit 12 peuvent être dimensionnés de manière à correspondre sensiblement à une hauteur de la zone de chargement du véhicule à aménager.

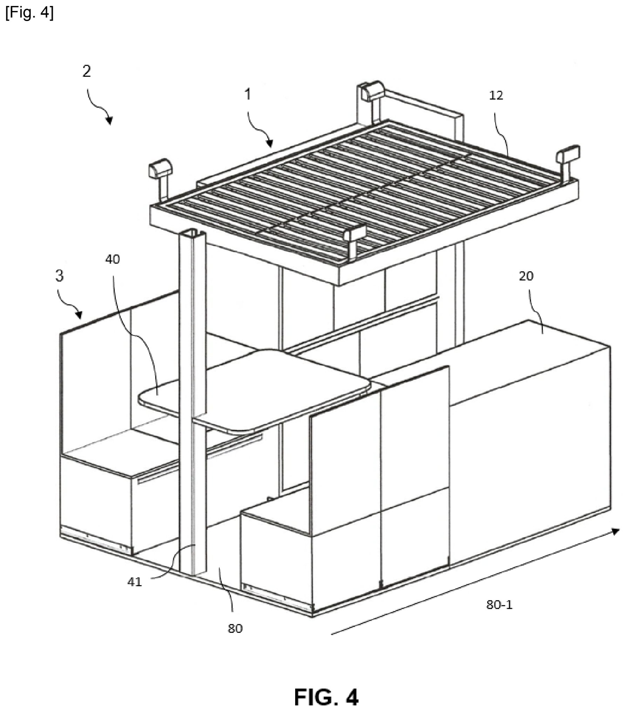

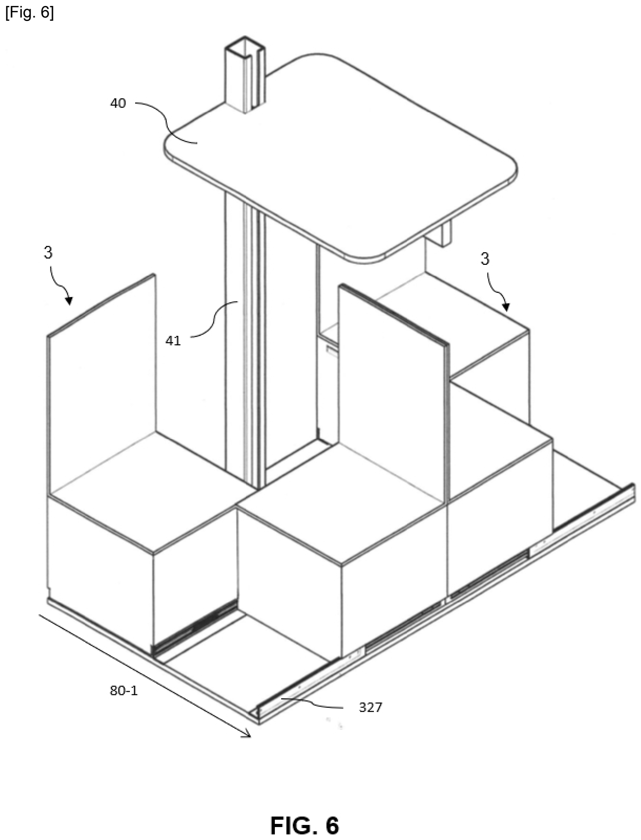

Selon un deuxième aspect, l'invention, décrite en lien avec les figures 4 à 9, porte sur un système d'ameublement 2 d'une zone de chargement d'un véhicule comprenant un système 1 pour l'aménagement intérieur d'un véhicule selon l'invention et au moins un dispositif d'assise 3.

Le système d'ameublement 2 d'une zone de chargement d'un véhicule est de préférence pour l'ameublement d'une zone de chargement d'un véhicule de type récréationnel, préférentiellement un van et/ou un fourgon.

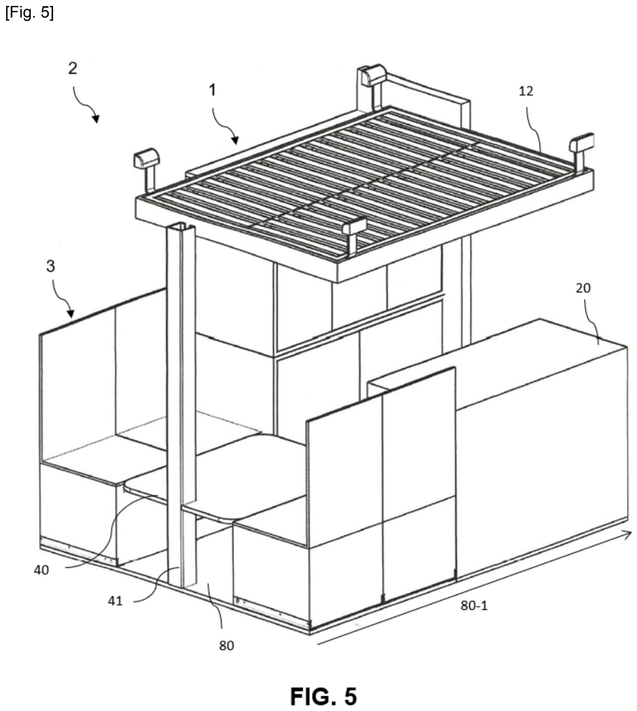

Sur les figures 4 et 5, à l'instar du module d'aménagement, au moins une partie des éléments qui constituent le dispositif d'assise 3 peut être fixée à la structure de soutien 70 agencée pour reposer sur le plancher 80 de la zone de chargement du véhicule.

Le dispositif d'assise 3 selon l'invention comporte un siège 310 comprenant une assise 312 sur laquelle sont montés une pluralité d'éléments de fixation 313.

A titre d'exemple illustratif, les éléments de fixation 313 peuvent correspondre à des goujons avec gorge, la gorge du goujon correspondant à une partie rainurée du goujon dont le diamètre est inférieur à celui du goujon (de la partie non rainurée du goujon), de préférence celle-ci correspondant à une rainure dont le diamètre est inférieur à celui de la partie non rainurée du goujon et dont la largeur correspond à l'épaisseur du moyen de solidarisation/désolidarisation 330.

Le dispositif d'assise 3 selon l'invention comporte en outre un support de siège 320 comprenant une pluralité d'orifices de fixation 323 agencés pour recevoir les éléments de fixation 313.

De manière préférée, les orifices de fixation 323 sont agencés pour permettre la réception des éléments de fixation 313 et pour assurer le positionnement du siège 310 au support de siège 320 selon différentes positions. Notamment, les orifices de fixation 323 peuvent être agencés pour permettre une liaison par encastrement des éléments de fixation 313.

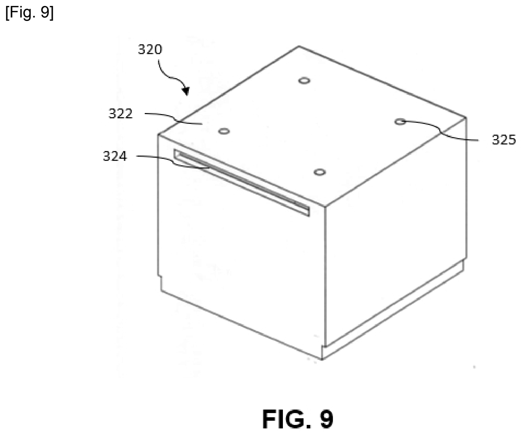

Toujours dans l'invention, afin de faciliter le positionnement du dispositif d'assise 3, ledit dispositif d'assise comporte un moyen de solidarisation/désolidarisation 330 positionné dans le support de siège 320. Selon un mode de réalisation, le moyen de solidarisation/désolidarisation 330 peut être intégré dans un évidement 326 (voir figure 9) pratiqué dans le support de siège 320 de manière à coulisser sur l'intérieur d'une face supérieure 322 du support de siège 320. Des ouvertures qui prennent la forme d'orifices de fixation 323 sont ainsi pratiquées dans le siège 320 afin de permettre d'une part le positionnement du siège 310 et d'autre part la solidarisation/désolidarisation via le moyen de solidarisation/désolidarisation 330 du siège 310 au support de siège 320.

Le moyen de solidarisation/désolidarisation 330 comprend une pluralité d'ouvertures 331 adaptées pour permettre le passage des éléments de fixation 313 et est en outre agencé pour permettre une fixation réversible entre le siège 310 et le support de siège 320. Plus particulièrement, le moyen de solidarisation/désolidarisation 330 peut être agencé pour permettre un positionnement adéquat entre les éléments de fixation 313 et les orifices de fixation 323 et ainsi assurer leurs liaisons.

De manière préférée, les ouvertures 331 sont agencées pour permettre la réception des éléments de fixation 313 et pour assurer le maintien du siège 310 au support de siège 320. Notamment, les ouvertures 331 peuvent être agencées pour permettre une liaison par encastrement des éléments de fixation 313. De manière encore plus préférée, les ouvertures 331 présentent un évidement dont le diamètre est adapté pour accueillir le goujon avec gorge.

Dans un mode de réalisation de l'invention, l'application d'une force horizontale au moyen de solidarisation/désolidarisation 330 selon un premier sens permet la liaison entre les éléments de fixation 313 et les orifices de fixation 323, tandis que l'application d'une force horizontale au moyen de solidarisation/désolidarisation 330 selon un deuxième sens, opposé au premier sens, permet la désolidarisation entre les éléments de fixation 313 et les orifices de fixation 323.

Plus particulièrement, lorsque les éléments de fixation 313 sont des goujons avec gorge, l'application d'une force horizontale au moyen de solidarisation/désolidarisation 330 selon un premier sens permet d'accueillir la partie rainurée dite « gorge » du goujon dans le deuxième évidement et ainsi assurer le maintien du siège 310 au support de siège 320.

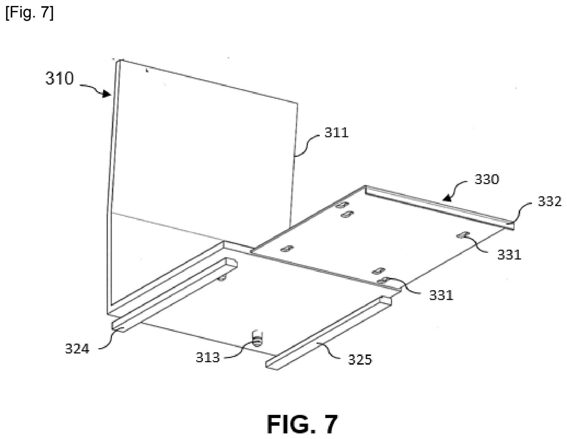

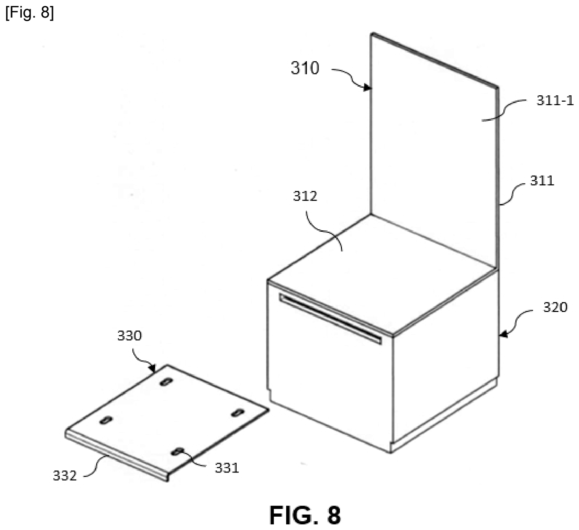

Comme présenté en figures 7 ou 8, afin de faciliter la solidarisation/désolidarisation du siège 310 au support de siège 320, le moyen de solidarisation/désolidarisation 330 peut comprendre un moyen de préhension 332 permettant à un utilisateur d'appliquer une force en tirant ou en poussant selon un premier ou un deuxième sens, le moyen de solidarisation/désolidarisation 330. Le moyen de préhension 332 peut prendre la forme d'un rebord vertical s'étendant le long d'un côté du moyen de solidarisation/désolidarisation 330.

En outre, afin de faciliter le positionnement du siège 310 et du moyen de solidarisation/désolidarisation 330 par rapport au support de siège 320, plus particulièrement des éléments de fixation 313 et des ouvertures 331 par rapport aux orifices de fixation 323, le support de siège 320 peut comprendre des supports de positionnement 324, 325 sur lesquels le moyen de solidarisation/désolidarisation 330 peut être monté. Les supports de positionnement 324, 325 présentent avantageusement des dimensions adaptées au moyen de solidarisation/désolidarisation 330 et sont montés à l'intérieur du support de siège 320 sous la face destinée à coopérer avec l'assise 312 du siège 310.

Dans un autre mode de réalisation d'un système d'ameublement 2 selon l'invention, le siège 310 peut comprendre un dossier 311 relié à l'assise 312. Le siège 310 peut en outre être agencé pour se fixer au support de siège 320 selon une première position dans laquelle la pluralité des orifices de fixation 323 coïncide avec au moins deux éléments de fixation 313 et selon une deuxième position dans laquelle la pluralité des orifices de fixation 323 coïncide avec au moins deux autres éléments de fixation 313.

En effet, des orifices de fixation 323 peuvent être positionnés sur le support de siège 320 d'une façon telle que le siège 310 peut être fixé au support de siège 320 dans différentes positions par rotation dudit siège et notamment pour autoriser quatre positions par rotation de 90° du siège 310 sur le support de siège 320.

Dans un mode de réalisation d'un système d'ameublement 2 selon l'invention, ce dernier peut comprendre au moins deux dispositifs d'assise 3 pour lesquels chaque dossier 311 comprend une face d'appui 311-1, et dans lequel :
- en première position, les faces d'appui 311-1 comprennent, de préférence sont agencées de manière à ce qu'elles comprennent, des directions normales parallèles et des sens opposés,
- en deuxième position, les faces d'appui 311-1 comprennent, de préférence sont agencées de manière à ce qu'elles comprennent, des directions normales parallèles et des sens identiques.

En complément, chaque dossier 311 peut être agencé de manière que leur face d'appui 311-1 respective occupe une troisième position dans laquelle les faces d'appui 311-1 comprennent des directions normales perpendiculaires et des sens identiques ou opposés.

Dans un mode de réalisation d'un système d'ameublement 2 selon l'invention, le dispositif d'assise 3 peut comprendre un moyen de guidage 327 agencé pour être monté entre le support de siège 320 et un plancher 80 de véhicule de sorte que l'au moins un dispositif d'assise 3 coulisse.

En effet, les figures 4 à 6 montrent un exemple d'un mode de réalisation d'un système d'ameublement selon l'invention dans lequel quatre dispositifs d'assise 3 sont positionnés, deux à deux, face à face. La possibilité de faire coulisser, notamment transversalement, un ou plusieurs des dispositifs d'assise 3 par rapport à un dispositif d'assise 3 adjacent permet d'une part d'intégrer l'ensemble des dispositifs d'assise dans le plus petit espace possible et d'autre part de libérer un espace utilisable, par un utilisateur en position assise, lorsque le dossier 311 occupe une position plutôt associée à une utilisation dans le cadre d'un véhicule en mouvement.

Comme déjà mentionné, le système d'ameublement 2 selon l'invention a pour but d'être intégré à un véhicule et à proposer une utilisation optimisée de l'espace disponible. En ce sens, les dispositifs d'assise 3 peuvent être utilisés lorsque le véhicule est à l'arrêt mais également lorsque le véhicule est en mouvement. Pour cela, l'orientation des dispositifs d'assise 3 doit pouvoir être modifiée de sorte que l'utilisateur soit dans une position sécuritaire : face ou dos à la route lorsque le véhicule se déplace.

Ainsi, le siège 310 peut en outre être agencé pour se fixer au support de siège 320 de sorte que la face d'appui 311-1 comprend une direction normale sensiblement perpendiculaire par rapport à un axe longitudinal 80-1 d'un plancher 80 de véhicule. Le siège 310 peut en outre être agencé pour se fixer au support de siège 320 de sorte que la face d'appui 311-1 comprend une direction normale sensiblement parallèle par rapport à l'axe longitudinal 80-1 d'un plancher 80 de véhicule.

Dans un mode de réalisation particulier d'un système d'ameublement 2 selon l'invention, ce dernier peut comprendre deux paires de dispositifs d'assise 3, chaque paire comprenant deux dispositifs d'assise 3 positionnés de manière adjacente, de préférence les sièges 310 de chaque paire de dispositif d'assise 3 comprennent une face adjacente. Les paires étant positionnées de manière que chaque dispositif d'assise 3 de la première paire soit positionné en miroir d'un dispositif d'assise 3 de la deuxième paire.

Ainsi, pour optimiser encore plus l'espace occupé par les dispositifs d'assise et notamment permettre leur utilisation lorsque le véhicule est en mouvement, les au moins deux dispositifs d'assise 3 agencés pour passer d'une première position à une deuxième position peuvent correspondre respectivement à un dispositif d'assise 3 de la première paire et à un dispositif d'assise 3 de la deuxième paire positionnés en miroir. Lorsque les faces d'appui 311-1 des au moins deux dispositifs d'assise 3 sont en deuxième position, les autres dispositifs d'assise 3 des première et deuxième paire peuvent être agencés pour coulisser transversalement de sorte que les dispositifs d'assise 3 de chaque paire ne soient pas adjacents, de préférence les sièges 310 de chaque paire de dispositif d'assise 3 ne comprennent pas de face adjacente ou comprennent une face partiellement adjacente de sorte qu'un utilisateur puisse positionner ses jambes. On entend par adjacent, un positionnement de deux dispositifs d'assise 3 ou des supports de siège 320 de deux dispositifs d'assise suffisamment proches pour que l'espace séparant les deux dispositifs d'assise ne permette pas à un utilisateur d'y placer ses jambes en position assise.

De manière générale, il est prévu que chaque dispositif d'assise 3 puisse comprendre une ceinture de sécurité, de type connu, qui permet de maintenir le corps de l'utilisateur solidaire du siège 310.

En complément, un système d'ameublement 2 selon l'invention peut comprendre une table 40 montée mobile en translation verticale sur un profilé 41 agencé pour être fixé sur un plancher 80 de véhicule et sur la face intérieure d'un pavillon de véhicule. Plus particulièrement la table 40 peut être positionnée entre au moins deux dispositifs d'assise 3.

La table 40 peut être agencée pour prendre au moins trois positions :
- Une première position haute dans laquelle, lorsque le module d'aménagement est en configuration haute, la table 40 coulisse le long du profilé 41 de manière à être positionnée sensiblement en-dessous du cadre de lit 12.
- Une deuxième position basse, dans laquelle la table 40 coulisse le long du profilé 41 de manière à être positionnée sensiblement au niveau de l'assise 312 du siège 310. Dans cette position, lorsque le système d'ameublement 2 selon l'invention comprend deux paires de de dispositifs d'assise 3 positionnées en miroir, les assises 312 respectives et la table 40 forment une structure de cadre de lit qui permet d'y positionner un matelas pour former un couchage supplémentaire. Cette position peut notamment être utilisée lorsque le véhicule n'est pas en mouvement.
- Une troisième position intermédiaire, dans laquelle la table 40 coulisse le long du profilé 41 de manière à être positionnée à une distance prédéterminée par rapport à l'assise 312 du siège 310. La distance prédéterminée peut par exemple correspondre à une hauteur de table 40 sur le profilé 41 adaptée pour permettre à un utilisateur d'être en position assise tout en ayant la possibilité d'utiliser la table 40.

Selon un troisième aspect, l'invention porte sur un véhicule comprenant un système 1 pour l'aménagement intérieur d'un véhicule selon l'invention ou un système d'ameublement 2 d'une zone de chargement d'un véhicule selon l'invention.

A titre d'exemples non limitatifs, le véhicule peut être de type récréatif motorisé, telles que des autocaravanes, fourgonnettes ou fourgons ou de type remorquable, telles que les caravanes.

L'invention peut faire l'objet de nombreuses variantes et applications autres que celles décrites ci-dessus. En particulier, sauf indication contraire, les différentes caractéristiques structurelles et fonctionnelles de chacune des mises en œuvre décrite ci-dessus ne doivent pas être considérées comme combinées et/ou étroitement et/ou inextricablement liées les unes aux autres, mais au contraire comme de simples juxtapositions. En outre, les caractéristiques structurelles et/ou fonctionnelles des différents modes de réalisation décrits ci-dessus peuvent faire l'objet en tout ou partie de toute juxtaposition différente ou de toute combinaison différente.

## Revendications

1. Système (1) pour l'aménagement intérieur d'un véhicule, le système (1) comprenant un module d'aménagement d'une zone de chargement du véhicule, le module d'aménagement comportant :
- un premier élément de mobilier (10) de forme parallélépipédique agencé pour coulisser le long d'une cloison (10-1) de la zone de chargement du véhicule par l'intermédiaire d'au moins un premier moyen de guidage (10-11),
- un deuxième élément de mobilier (11) de forme parallélépipédique comprenant :
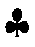 une face inférieure agencée pour reposer sur un plancher (80) de véhicule,
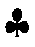 au moins un deuxième moyen de guidage (11-1) transversal agencé pour être monté entre la face inférieure du deuxième élément de mobilier (11) et un plancher (80) de véhicule de sorte que le deuxième élément de mobilier (11) coulisse,
- un cadre de lit (12) comprenant une première partie (12-1) de cadre fixée sur une face supérieure du premier élément de mobilier (10) et une deuxième partie (12-2) de cadre de lit (12), ledit cadre comprenant au moins un moyen de fixation rétractable (12-21) agencé pour être relié au plafond du véhicule,
ledit module d'aménagement étant agencé pour passer d'une configuration dite « haute », dans laquelle les premier et deuxième éléments de mobilier (10, 11) sont positionnés l'un au-dessus de l'autre, à une configuration dite « basse », dans laquelle les premier et deuxième élément de mobilier (10, 11) sont positionnés côte à côte de sorte que la deuxième partie (12-2) de cadre de lit (12) se positionne sensiblement au-dessus d'une face supérieure du deuxième élément de mobilier (11).

2. Système (1) pour l'aménagement intérieur d'un véhicule selon la revendication 1, dans lequel le premier élément de mobilier (10), le deuxième élément de mobilier (11) et le cadre de lit (12) sont dimensionnés de manière à correspondre sensiblement à une hauteur d'une zone de chargement du véhicule à aménager.

3. Système (1) pour l'aménagement intérieur d'un véhicule selon la revendication 1 ou 2, dans lequel le au moins un moyen de fixation rétractable (12-21) comprend au moins deux sangles rétractables motorisées fixées sur la deuxième partie (12-2) de cadre de lit (12).

4. Système d'ameublement (2) d'une zone de chargement d'un véhicule, ledit système comprenant :
- un système (1) pour l'aménagement intérieur d'un véhicule selon l'une quelconque des revendications 1 à 3,
- au moins un dispositif d'assise (3) comportant :
∘ un siège (310) comprenant une assise (312) sur laquelle sont montés une pluralité d'éléments de fixation (313),
∘ un support de siège (320) comprenant une pluralité d'orifices de fixation (323) agencées pour recevoir les éléments de fixation (313),
∘ un moyen de solidarisation/désolidarisation (330) comprenant une pluralité d'ouvertures (331) adaptées pour permettre le passage des éléments de fixation (313), le moyen de solidarisation/désolidarisation (330) étant en outre agencé pour permettre une fixation réversible entre le siège (310) et le support de siège (320).

5. Système d'ameublement (2) selon la revendication 4, dans lequel le siège (310) comprend un dossier (311) relié à l'assise (312), et dans lequel le siège (310) est agencé pour se fixer au support de siège (320) selon une première position dans laquelle la pluralité des orifices de fixation (323) coïncident avec au moins deux éléments de fixation (313) et selon une deuxième position dans laquelle la pluralité des orifices de fixation (323) coïncident avec au moins deux autres éléments de fixation (313).

6. Système d'ameublement (2) selon la revendication 5, ledit système d'ameublement comprenant au moins deux dispositifs d'assise (3) pour lesquels chaque dossier (311) comprend une face d'appui (311-1), et dans lequel :
- en première position, les faces d'appui (311-1) comprennent des directions normales parallèles et des sens opposés,
- en deuxième position, les faces d'appui (311-1) comprennent des directions normales parallèles et des sens identiques.

7. Système d'ameublement (2) selon l'une quelconque des revendications 4 à 6, dans lequel l'au moins un dispositif d'assise (3) comprend un moyen de guidage agencé pour être monté entre le support de siège (320) et un plancher (80) de véhicule de sorte que l'au moins un dispositif d'assise (3) coulisse.

8. Système d'ameublement (2) selon l'une quelconque des revendications 4 à 7, ledit système d'ameublement comprenant deux paires de dispositifs d'assise (3), chaque paire comprenant deux dispositifs d'assise (3) positionnés de manière adjacente, lesdites paires étant positionnées de manière que chaque dispositif d'assise (3) de la première paire soit positionné en miroir d'un dispositif d'assise (3) de la deuxième paire.

9. Système d'ameublement (2) selon les revendications 6, 7 et 8, dans lequel les au moins deux dispositifs d'assise (3) agencés pour passer d'une première position à une deuxième position correspondent respectivement à un dispositif d'assise (3) de la première paire et à un dispositif d'assise (3) de la deuxième paire positionnés en miroir, et dans lequel lorsque les faces d'appui (311-1) des au moins deux dispositifs d'assise (3) sont en deuxième position, les autres dispositifs d'assise (3) des première et deuxième paire étant agencés pour coulisser transversalement de sorte que les dispositifs d'assise (3) de chaque paire ne soient pas adjacents.

10. Système d'ameublement (2) selon l'une quelconque des revendications 4 à 9, ledit système d'ameublement comprenant en outre une table (40) montée mobile en translation verticale sur un profilé (41) agencé pour être fixé sur un plancher (80) de véhicule et sur la face intérieure d'un pavillon de véhicule, la table (40) étant agencée pour prendre au moins trois positions :
- une première position haute dans laquelle, lorsque le module d'aménagement est en configuration haute, la table (40) coulisse le long du profilé (41) de manière à être positionnée sensiblement en-dessous du cadre de lit (12),
- une deuxième position basse, dans laquelle la table (40) coulisse le long du profilé (41) de manière à être positionnée sensiblement au niveau de l'assise (312) du siège (310),
- une troisième position intermédiaire, dans laquelle la table (40) coulisse le long du profilé (41) de manière à être positionnée à une distance prédéterminée par rapport à l'assise (312) du siège (310).

11. Véhicule comprenant un système (1) pour l'aménagement intérieur selon l'une quelconque des revendications 1 à 3 ou un système d'ameublement (2) d'une zone de chargement d'un véhicule selon l'une quelconque des revendications 4 à 10.
